Europäisches Patentamt

European Patent Office

Office européen des brevets

(11) Veröffentlichungsnummer: **0 020 874**
A1

# (12) EUROPÄISCHE PATENTANMELDUNG

(21) Anmeldenummer: 80101630.4

(22) Anmeldetag: 27.03.80

(51) Int. Cl.³: **G 02 B 7/26**

(30) Priorität: **14.06.79 US 48407**

(43) Veröffentlichungstag der Anmeldung: **07.01.81**
**Patentblatt 81/1**

(84) Benannte Vertragsstaaten: **DE FR GB**

(71) Anmelder: **International Business Machines
Corporation, Armonk, N.Y. 10504 (US)**

(72) Erfinder: **Price II, Lynn Arnold, 437 Payne Drive, Endicott,
N.Y. 13760 (US)**
Erfinder: **Statkevicus, Joseph Richard, 14 Sunset
Terrace, Apalachin, N.Y. 13732 (US)**

(74) Vertreter: **Teufel, Fritz, Dipl.-Phys., Schönaicher
Strasse 220, D-7030 Böblingen (DE)**

(54) **Optischer Schalter für Lichtwellenleiter.**

(57) In dem optischen Schalter sind zwei oder mehrere
Lichtwellenleiter (5, 7) so fest eingespannt, dass ihre Enden auf dem Umfang einer vorgegebenen Kurve liegen,
beispielsweise auf dem Umfang eines Kreises. Das Ende
eines weiteren Lichtwellenleiters (9) ist beweglich und
kann mit mechanischen Mitteln (13) auf der anderen Seite
der Kurve geführt und gegenüber einer der fixierten Lichtwellenleiter ausgerichtet werden. In der ausgerichteten
Stellung sind Verriegelungsvorrichtungen (z.B. 25, 27) vorgesehen. Statt einzelner Lichtwellenleiter können auch
Bündel derartiger Leiter optisch zusammengeschaltet werden.

ACTORUM AG

## Optischer Schalter für Lichtwellenleiter

Die Erfindung betrifft einen optischen Schalter für Lichtwellenleiter nach dem Oberbegriff von Anspruch 1.

Lichtwellenleiter, sogenannte optische Fasern, gewinnen als breitbandige Informationsträger immer mehr Bedeutung. Um mit derartigen Fasern komplexe Nachrichteninformationssysteme aufbauen zu können, werden beispielsweise optische Schalter benötigt, mit denen auf einfache Weise temporäre Verbindungen zwischen einer optischen Faser und anderen hergestellt werden können.

Im Stand der Technik sind hierzu mechanisch betätigte Schalter bekannt geworden, beispielsweise durch die US Patentschriften 4 057 719, 4 082 435 und 4 088 387. Die dort beschriebenen optischen Schalter haben jedoch einen relativ komplizierten Aufbau; außerdem sind die zu verbindenden Fasern durch mehr als eine Schnittfläche voneinander getrennt, so daß sich relativ hohe optische Verluste ergeben.

Die vorliegende Erfindung stellt sich daher die Aufgabe, einen optischen Schalter für Lichtwellenleiter anzugeben, der geringe optische Verluste aufweist und aufgrund seines einfachen mechanischen Aufbaus kostengünstig hergestellt werden kann.

Diese Aufgabe wird durch die im Hauptanspruch gekennzeichnete Erfindung gelöst. Ausgestaltungen der Erfindung sind in den Unteransprüchen gekennzeichnet.

Um einzelne Lichtfasern oder auch Lichfaserbündel optisch in schneller und einfacher Weise miteinander zu verbinden, wird eine der Lichtfasern so im optischen Schalter be-EN 978 024 festigt, daß ihr Ende beweglich ist und längs einer vorbestimmten Bahn, z. B. einem Kreisbogen, geführt werden kann. Entlang der von diesem beweglichen Ende durchlaufenen Bahn sind die Enden eines oder mehrerer Lichwellenleiter fixiert, mit denen die optische Verbindung erfolgen soll. Die Führung des beweglichen Lichtleiterendes zu der ausgewählten Position erfolgt z. B. durch mechanische Mittel.

Dieser optische Schalter hat den Vorteil eines einfachen mechanischen Aufbaus mit nur wenigen bewegten Teilen; er kann als Vielfachschalter mit einer relativ großen Anzahl von Schaltpositionen ausgebildet werden. Seine optischen Verluste sind gering, da zwischen den zu verbindenden Lichtleitern nur eine Luftfläche vorhanden ist.

Ein Ausführungsbeispiel der Erfindung wird nun anhand von Zeichnungen näher erläutert. Es zeigen:

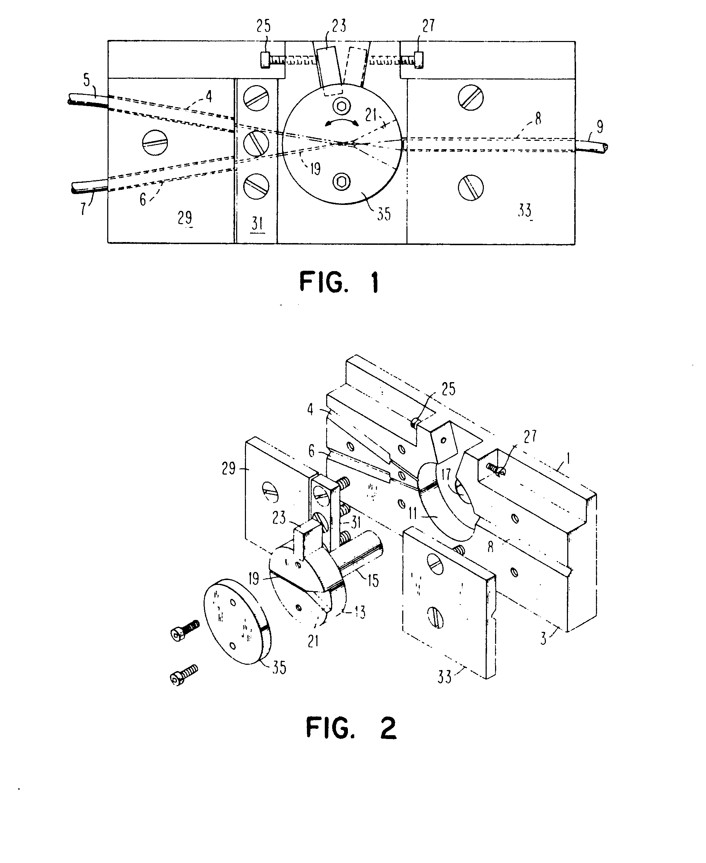

Fig. 1          eine Aufsicht auf einen optischen Schalter nach einem bevorzugten Ausführungsbeispiel der Erfindung,

Fig. 2          eine perspektivische Explosivzeichnung des Schalters nach Fig. 1.

In den beiden Fign. weisen gleiche Bezugszeichen auf einander entsprechende Teile. Auf einer Grundplatte 1 ist ein Umschaltelement 3 befestigt. Dieses Umschaltelement 3 dient als Träger- und Führungselement für die miteinander zu verbindenden Lichtleiter und hat dazu eine Mehrzahl V-förmiger Rillen, deren Abmessung den benutzten Lichtwellenleitern entspricht. Die Rillen 4 und 6 sind für die unbeweglichen Fasern 5 und 7 vorgesehen, die Rille 8 für einen Licht-

EN 978 024

wellenleiter 9, dessen Endteil beweglich ist. Die Lichtwellenleiter selbst ragen über die Enden ihrer Umhüllungen
hinaus; die Enden der Fasern 5 und 7 sind an bestimmten
Stellen längs des Umfangs einer kreisförmigen Öffnung 11
des Trägerelements 3 befestigt.

In der kreisförmigen Öffnung 11 ist ein genau eingepaßtes
drehbares Umschaltelement (Rotor) 13 angebracht, das auf der
Stirnseite einer konzentrischen Welle 15 montiert ist; diese
Welle wird durch eine Öffnung 17 der Grundplatte 1 gehalten,
so daß der Rotor 13 in verschiedene Winkelpositionen bezüglich der Öffnung 11 gedreht werden kann.

Rotor 13 weist in seiner Oberfläche einen Schlitz 19 auf,
der radial vom Zentrum des Rotors bis zu dessen Umfang verläuft. In der dazu entgegengesetzten Richtung erweitert
sich Schlitz 19 zu einem Segment 21, um dem beweglichen Ende
der Faser 9 in Schlitz 8 genügend Spielraum zu verschaffen.

Rotor 13 ist außerdem mit einer radialen Nase 23 versehen,
die zusammen mit zwei einstellbaren Anschlagschrauben 25
und 27 im Trägerelement die Drehung des Rotors 13 beschränken. Die Einstellung der Schrauben 25 und 27 ist so gewählt,
daß in den beiden Endstellungen das in Schlitz 19 enthaltene
bewegliche Ende der Faser 9 exakt radial mit dem Ende der
Faser 5 bzw. der Faser 7 ausgerichtet ist. Je nach Stellung von Rotor 13 kann dann offensichtlich Licht zwischen
den Fasern 5 und 9 bzw. 7 und 9 ausgetauscht werden. Die
Deckplatten 29, 31 und 33 werden mit Schrauben gehalten,
um die Lichtwellenleiter an Ort und Stelle zu fixieren;
diese Deckplatten können ebenfalls mit V-förmigen Rillen
entsprechend denen dem Trägerelement 3 ausgestattet sein.
Rotor 13 besitzt ebenfalls eine Deckplatte 35, mit der das
bewegliche Ende der Faser 9 fixiert wird.

EN 978 024

Zum Drehen der Welle 15 kann eine beliebige Einrichtung verwendet werden, beispielsweise ein handbetätigter Knopf, eine Nockenwelle, eine Spulenwicklung oder ähnliches. Der optische Schalter kann auch ohne weiteres so konstruiert werden, daß mehr als zwei Schaltpositionen zur Verfügung stehen; für jede dieser Positionen müssen dann geeignete Mittel vorgesehen sein, um den Rotor 13 unverrückbar festzuhalten.

0020874

- 5 -

PATENTANSPRÜCHE

1. Optischer Schalter für Lichtwellenleiter mit mechanischer Einstellung, dadurch gekennzeichnet, daß die Enden zweier oder mehrerer Lichtwellenleiter (5, 7) auf der Außenseite einer vorgegebenen Kurve fixiert sind und daß ein längs der Innenseite der Kurve beweglich geführtes Ende eines weiteren Lichtwellenleiters (9) gegenüber einem der fixierten Enden ausgerichtet werden kann.

2. Optischer Schalter nach Anspruch 1, dadurch gekennzeichnet, daß die fixierten Enden und das bewegliche Ende der Lichtwellenleiter beiderseits eines Kreissegments liegen.

3. Optischer Schalter nach Anspruch 2, dadurch gekennzeichnet, daß das bewegliche Ende (19) des Lichtwellenleiters durch eine drehbare Scheibe (13) geführt wird, die in Positionen arretierbar ist, die der gegenseitigen Ausrichtung von Lichtwellenleitern entsprechen.

4. Optischer Schalter nach Anspruch 3, dadurch gekennzeichnet, daß die drehbare Scheibe (13) eine Nut (19) zur Aufnahme des beweglichen Endes des Lichtwellenleiters (9) aufweist, sowie eine sektorförmige Aussparung (21) am Ende der Nut, an dem der Lichtwellenleiter (9) der drehbaren Scheibe (13) zugeführt wird.

EN 978 024

FIG. 1

FIG. 2

| EINSCHLÄGIGE DOKUMENTE | | | KLASSIFIKATION DER ANMELDUNG (Int.Cl. 4) |
|---|---|---|---|
| Kategorie | Kennzeichnung des Dokuments mit Angabe, soweit erforderlich, der maßgeblichen Teile | betrifft Anspruch | |
| | US - A - 4 023 887 (D.E. SPEERS)<br>* Spalte 15 und Spalte 16; Abbildung 28 *<br><br>-- <br><br>DE - A - 2 016 498 (SIEMENS A.G.)<br>* Seiten 5,6 und Abbildungen 5-7 *<br><br>---- | 1,3,4<br><br><br><br>1,3,4 | G 02 B 7/26 |

RECHERCHIERTE SACHGEBIETE (Int. Cl. 4)

G 02 B 7/26

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsatze
E: kollidierende Anmeldung
D: in der Anmeldung angeführtes Dokument
L: aus andern Gründen angefuhrtes Dokument
&: Mitglied der gleichen Patentfamilie. übereinstimmendes Dokument

X. Der vorliegende Recherchenbericht wurde für alle Patentansprüche erstellt.

| Recherchenort | Abschlußdatum der Recherche | Prüfer |
|---|---|---|
| Den Haag | 27-06-1980 | MALIC |

EPA form 1503.1  06.78